# EUROPEAN PATENT APPLICATION

(11) **EP 4 751 893 A1**
(43) Date of publication of application: **03.06.2026**
(21) Application number: 24383292.0
(22) Date of filing: 28.11.2024
(51) Int. Cl.: B29C 65/18, B29C 65/38, B29C 65/78, B31B 70/64, B29L 31/00, B31B 155/00, B31B 160/20, B31B 170/10

(54) **PRODUCTION OF BOTTOM GUSSET POUCHES**

(71) Applicant: SIG Services AG, 8212 Neuhausen am Rheinfall (CH)
(72) Inventor: SANTINI TORRES, Luis Alberto, 08210 Barberà del Vallès, Barcelona (ES); PIRIS ALBARRAL, José Manuel, 08210 Barberà del Vallès, Barcelona (ES); VAN TUIL, Johannes Wilhelmus, 08210 Barberà del Vallès, Barcelona (ES)
(74) Representative: EP&C

(57) **Abstract**

A production system for flexible pouches (100) having a bottom gusset comprises first and second bottom sealing stations (11, 12) each having one or more bottom sealing units (13) with first and second bottom sealing jaws (14, 15). Each sealing jaw (14, 15) comprises a sealing face (16a and 16b) configured to project across a bottom region (104) of the bottom gusset of a pouch and across a side edge section (110a, 110b) of each of the side edges of said pouch, as well as across an adjoining side edge section (110a, 110b) of each adjacent pouch, i.e. upstream and downstream pouches. The side edge sections (110a, 110b) each extend from below to above the folding line (108, 109) of the bottom gusset.

## Description

The present invention relates the production of flexible pouches having a bottom gusset.

It is generally known to produce flexible pouches having a bottom gusset. The pouches have a body of a heat-sealable film material with opposed walls, two side edges, and a bottom gusset. In embodiments, the top edge is provided with a spout and a closure device to close the spout. In other designs, for example, the pouch is provided with a zipper-like closure at the top. Other designs are known as well.

The bottom gusset comprises a first bottom gusset wall part and a second bottom gusset wall part, which are connected to each other along a folding line. A so-called triple point is present at each side edge of the pouch, wherein above the triple point the first and second walls are directly heat-sealed onto each other. Below the triple point the first wall is heat-sealed to the first gusset portion and the second wall is heat-sealed to the second gusset portion. Thus, at the triple point the thickness of the side edge changes between two times the wall thickness and four times the wall thickness. It is known that it is difficult to create a good seal of the side edges of the pouch near and at the triple point. This is, for example, of particular relevance when a perishable food product is filled in the pouch.

For the production of flexible pouches having a bottom gusset it is known to make use of a production system comprising a bottom heat-sealing device which is configured and operated to seal a bottom region of pouches in a string of interconnected pouches, see for example JP2007245486 and WO2021018913.

As mentioned, it is difficult to provide a reliable heat-seal near and at the triple point of the side edges of each pouch. Known production systems therefore arrange a dedicated triple point sealing station downstream of the bottom heat-sealing device, wherein the triple point sealing station comprises a sealing face that is configured to perform one or more additional heat-seal actions at and in the proximity of the triple point. A drawback hereof is the need for such a dedicated triple point sealing station, which increases the footprint of the system.

The sealing at the triple point has become an even more pressing issue in view of the desire to have metal-free film material. As is known in the art, the metal layer in a heat-sealable film renders the film rather robust in view of the heat-sealing process, e.g. allowing for significant heat input. The metal-free films behave more fragile when heat-sealing is done, and may be difficult in combination with existing sealing approaches.

The present invention aims to provide measures which provide an improved production of flexible pouches with a bottom gusset.

The present invention aims to provide measures which enhance the quality of the heat-sealing, in particular enhancing the seal at and in proximity of the triple points of the pouch.

According to a first aspect, the invention provides a production system according to claim 1.

The first and second bottom sealing jaws each have a sealing face comprising side face portions configured to project across a first side edge section of the first side edge and a second side edge section of the second side edge of said pouch, as well as across an adjoining side edge section of each adjacent pouch. Optionally, as in a preferred practical embodiment, the sealing face of each of the first and second bottom sealing jaws further comprises a central face portion configured to project across a bottom region of the bottom gusset of a pouch.

The system can be configured and operated such that the bottom heat-sealing device seals the side edge sections of the side edges of each pouch twice, in embodiments sealing the bottom region of the pouch just one time. The triple point is therefore sealed two times by the bottom heat-sealing device. This approach provides, in an effective manner, a high quality and secure seal at the triple point, decreasing the chance of a (minuscule) leak. In embodiments, as explained herein, a side edge heat-sealing device of the system seals the entire side edge, including the side edge section, so that the triple point is sealed three times.

Due to the design of the first and second bottom sealing stations, preferably in combination with a side edge heat sealing device, it is - as preferred in the context of this application - not needed to provide a dedicated triple point sealing device arranged downstream of the bottom heat sealing device to provide an additional seal at and in proximity of the triple point. The production system can therefore be shortened in length compared to known production systems.

The film material drive of the production system is configured and operated to transport the string of interconnected pouches in the transport direction past at least the bottom heat-sealing device, preferably also past the side edge heat sealing device. In the string of interconnected pouches, the side edges of neighboring pouches adjoin one another. In a preferred embodiment, the string of interconnected pouches is moved intermittently, so stepwise, along the transport direction, wherein the string of interconnected pouches is transported one or more discrete pouch positions in the transport direction, e.g. over the length of a group of pouches. For example, when groups of four pouches are present, the string is intermittently moved over four pouch positions in the transport direction past the heat-sealing device(s).

It is also envisaged that, in an embodiment, the film material drive of the production system is configured and operated to transport the string of interconnected pouches continuously in the transport direction. Herein, for example, the sealing devices and/or sealing stations and/or sealing units are configured and operated to be moved reciprocating along the transport direction, such that the sealing units move at the same speed and in the same direction as the string of pouches during a heat-sealing cycle. At the end of the cycle, when the seals have been completed and the sealing jaws open, the sealing units move back to a starting position to clamp and seal the next group of pouches whilst in motion in transport direction.

The bottom sealing jaws will in practical embodiments be in the opened position in order to align the group(s) of pouches in the string with the jaws of the bottom sealing units in the transport direction by the film material drive. Once the pouches are positioned correctly, the actuator device(s) move the bottom sealing jaws of the units to the clamped position.

Each bottom sealing unit of the first bottom sealing station is configured and operated to, in a cycle, heat-seal:
- a first side edge section of the first side edge and the second side edge section of the second side edge of said first pouch of the group,
- a second side edge section of the adjoining second side edge of the second pouch adjacent upstream to said first pouch of the group,
- a first side edge section of the adjoining first side edge of the second pouch adjacent downstream of said first pouch of the group,
- optionally, the bottom region of a first pouch of the group,

Each bottom sealing unit of the second bottom sealing station is configured and operated to, in a cycle, heat-seal:
- a first side edge section of the first side edge and the second side edge section of the second side edge of said second pouch of the group,
- a second side edge section of the adjoining second side edge of the first pouch adjacent upstream to said second pouch of the group,
- a first side edge section of the adjoining first side edge of the first pouch adjacent downstream of said second pouch of the group,
- optionally, the bottom region of a second pouch of the group.

The first side edge sections and the second side edge sections which are heat-sealed by the bottom heat-sealing device each extend from below to above the folding line of the bottom gusset. For example, the first and second side edge sections extend from a lower edge of the bottom gusset of the pouch to above the folding line.

In a practical embodiment, all pouches which are produced are identical.

In a practically preferred embodiment, the sealing face of each of the first and second bottom sealing jaws further comprises a central face portion configured to project across a bottom region of the bottom gusset of a pouch. Herein each bottom sealing unit of the first bottom sealing station is configured to, in the cycle, also heat-seal the bottom region of said first pouch of the group, and each bottom sealing unit of the second bottom sealing station is configured to, in the cycle, also heat-seal the bottom region of said second pouch of the group.

In a practical embodiment, the heat-sealing of a bottom region of a pouch involves sealing a portion of the first wall to the first bottom gusset wall part and a portion of the second wall to the second bottom gusset portion. For example, a spacer member of the bottom heat-sealing device is arranged between the first and second gusset wall parts during this heat-sealing.

In an embodiment, both bottom sealing jaws of a unit are movable by the actuator device, e.g. the first and second bottom sealing jaws are moved with respect to each other to the opened and clamped position. Alternatively, one of the first and second bottom sealing jaws is a passive counter bottom sealing jaw which remains in a fixed location seen in the direction of clamping/opening, wherein the other of the first and second bottom sealing jaw is moved with respect to the passive counter bottom sealing jaw.

In an embodiment, the film material drive includes one or more drive units arranged along the path of the string of interconnected pouches, which drive unit(s) is/are configured to move the string of pouches, e.g. intermittently over one or more discrete pouch positions in a transport direction, e.g. over the length of a group per motion step, e.g. over four pouches.

In an embodiment, the second bottom sealing station is arranged downstream with respect to the first bottom sealing station such that as one group of pouches is arranged at the first bottom sealing station the downstream adjacent group of pouches is arranged at the second bottom sealing station. So, in this arrangement the bottom sealing stations are directly adjacent one another. In another approach, the spacing between the bottom sealing stations is larger, e.g. with one or more additional pouch positions between the bottom sealing stations.

In an embodiment, the production system further comprises a side edge heat-sealing device which is configured to heat-seal the side edges of the pouches, preferably over their entire extension, preferably from below the triple point (e.g. from the lower edge of the pouch) to the top of the pouch. The side edges may be straight, but other shapes, e.g. with curved sections, are also envisaged, e.g. curvature of one side edge following the curvature of the adjoining side edge.

In combination with the bottom heat-sealing device, the side edge heat-sealing device, preferably, achieves that each side edge section at and in proximity of the triple point is heat-sealed three times, yet without the presence of a dedicated triple point sealing device in the production system.

Preferably, the side edge heat sealing device is positioned downstream of the bottom heat-sealing device.

The side edge heat-sealing device in combination with the bottom heat-sealing device allows to seal each side edge of each pouch a single time, seal the bottom region of each pouch a single time, and seal the side edge sections of each side edge of each pouch three times.

The combination of the side edge heat-sealing device and the bottom heat-sealing device therefore provides a good seal of the entire pouch. The triple point is, preferably, heat-sealed three times by such production system. This triple seal is established without the need of a separate triple point sealing device, thereby decreasing the length of the production system and increasing capacity of the system.

Preferably, the side edge heat-sealing device is arranged downstream of the bottom heat-sealing device, such that the bottom regions and side edge sections of each pouch are heat-sealed first and the side edges of each pouch thereafter.

It is also envisaged that, in an embodiment, the side edge heat-sealing device is arranged upstream of the bottom heat-sealing device.

In an embodiment, the side edge heat-sealing device comprises a first side edge sealing station and a second side edge sealing station, wherein each of the first and second side edge sealing stations comprises one or more side edge sealing units, e.g. two units, wherein each side edge sealing unit comprises:
- a first side edge sealing jaw,
- a second side edge sealing jaw,
wherein each side edge sealing station, e.g. each side edge sealing unit, comprises an actuator device configured to move the first and second side edge sealing jaws relative to one another between an opened position and a clamped position.

In an embodiment, each side sealing unit comprises an actuator device configured to move the first and second side edge sealing jaws relative to one another between an opened position and a clamped position. In another embodiment, the actuator device is part of the side edge sealing station and operates multiple side edge sealing units.

In an embodiment, the first and the second side edge sealing jaw each comprises a sealing face which is configured to project across adjoining first and second side edges of two adjacent pouches.

In an embodiment, each side edge sealing unit of the first side edge sealing station is configured and operated to, in a cycle, heat-seal the first side edge of a first pouch of the group and the adjoining second side edge of a second pouch adjacent upstream of said first pouch. Each side edge sealing unit of the second side edge sealing station is configured and operated to, in a cycle, heat-seal the second side edge of a first pouch of the group and the adjoining first side edge of a second pouch adjacent downstream of the said pouch.

In an embodiment, the bottom heat-sealing device and the side edge heat-sealing device are configured to seal each pouch such that the first and second side edge sections which extend from below to above the folding line are sealed in at least three different cycles, e.g. at least being sealed in a first cycle with the first bottom sealing station, in a second cycle with the second bottom sealing station, and being sealed in a third and possibly also a fourth cycle with the side edge heat-sealing device.

The side edge heat-sealing device may be configured and operated to seal the side edges of each pouch in a third and a fourth cycle, e.g. wherein in the third cycle the first side edge of the one or more first pouches of the group and the adjoining second side edge of each upstream adjacent second pouch are sealed by the first side edge sealing station, and wherein in the fourth cycle the second side edge of one or more first pouches of the group and the adjoining first side edge of each downstream adjacent second pouch are sealed by the second side edge sealing station. Preferably, the side edge sealing stations are arranged so that a group of pouches is moved directly from the first to the second side edge sealing station. However, it is also envisaged that there are one or more intermediate pouch positions between the side edge sealing stations.

Preferably, there are one or more intermediate pouch positions between the bottom heat-sealing device and the side edge heat sealing device.

In a practical embodiment, two first pouches and two second pouches form a group. In embodiments, the first and second bottom sealing stations each have two bottom sealing units, wherein the film material drive is configured to transport the interconnected string of pouches intermittently over four discrete pouch positions in the transport direction.

In an embodiment, each of the first and second side edge sealing stations has two side edge sealing units, wherein the two sealing units of the first side edge sealing station are configured to heat-seal the first side edges of the two first pouches of the group and the adjoining second side edges of the second pouches adjacent upstream of said first pouches, and wherein the two sealing units of the second side edge sealing station are configured to heat-seal the second side edges of the two first pouches of the group and the adjoining first side edges of the second pouches adjacent downstream of said respective first pouches. In an embodiment, the side edge heat sealing device is arranged downstream of the bottom heat-sealing device.

In an embodiment, the side edge heat-sealing device has one side edge sealing station, wherein the one side edge sealing station comprises one side edge sealing unit or multiple side edge sealing units which are arranged next to each other. For example, each side edge sealing unit is configured to seal either a first side edge of a first pouch and an adjoining second side edge of an upstream second pouch or a second side edge of a first pouch and an adjoining first side edge of a downstream second pouch. The side edge sealing units may be arranged such that during one cycle, e.g. the third cycle, the first side edge of the one or more first pouches of a group and the adjoining second side edge(s) of one or more second pouches and the second side edge of the one or more first pouches of the group and the adjoining first side edge(s) of one or more second pouches are sealed simultaneously by the units of the side edge heat-sealing device.

In an embodiment, the first and second bottom sealing stations each comprise one, two, three, four, etc. bottom sealing units, e.g. two.

In an embodiment, each of the first and second side edge sealing station each comprise one, two, three, four, etc. side edge sealing units, e.g. two.

In an embodiment, the first and second bottom sealing stations, and, preferably, also the first and second side edge sealing stations, are mounted on a common frame and are each positionable relative to the frame along the transport direction, e.g. each sealing unit being independently positionable relative to the frame, e.g. to allow for adjustment to different pouches, e.g. different pouch sizes.

In an embodiment, the sealing faces of the jaws of the bottom sealing units each have two lateral extension portions, which extend upstream and downstream respectively, such that the lateral extension portions heat-seal a section at a lower end of the bottom region of the two adjacent pouches.

In an embodiment, the side edges of the first and second gusset wall parts are heat-sealed together by the side edge heat-sealing device or by the bottom heat-sealing device.

In an embodiment, the first and second bottom sealing stations, the one or more bottom sealing units of the first bottom sealing station and of the second bottom sealing stations, and optionally the first side edge sealing station and the second side edge sealing station, and optionally the one or more side edge sealing units of the side edge sealing stations, are arranged in the production system, e.g. on a common frame, to be positionable along the transport direction at various positions. This allows, e.g., the sealing units to seal pouches of different sizes. For example, the distance between bottom sealing units and between side edge sealing units can be varied to accommodate pouches of different widths. It will be appreciated that the sealing jaws are, preferably, exchangeable to allow for production of different pouches.

In embodiments, as known in the art, the sealing units are configured and operated such that the sealing faces of the jaws have a constant elevated heat-sealing temperature, e.g. each jaw comprising a heating element, e.g. an electric heating element, to maintain an elevated heat-sealing temperature.

In another embodiment, as is known in the art, the sealing units are configured and operated such that the sealing faces of the jaws are impulse heatable sealing faces, e.g. induction based impulse heatable sealing faces. Impulse heating of the sealing faces implies a fast increase in temperature of the sealing face which is maintained for a very short duration to cause the heat-sealing.

In an embodiment, the production system comprises a cooling unit configured to cool the pouches downstream of the sealing stations, e.g. to cool the heat-sealed regions of the pouches. Preferably, the cooling unit is arranged downstream of the side edge heat-sealing device. Due to the cooling, the string of interconnected pouches will become stiffer, thus reducing the chance of undue stretching when the string is pulled by the film material drive.

In an embodiment, the film material drive is configured and operated to pull the string of interconnected pouches past the bottom heat-sealing device and the side edge heat-sealing device in a transport direction,
wherein the film material drive comprises a master film material drive unit downstream of all sealing stations at a far downstream end of the string of interconnected pouches,
wherein the film material drive further comprises a first film material drive unit, which is arranged downstream of the bottom heat-sealing device and upstream the master drive unit, and which comprises:
   - a first drive unit for pulling the string of interconnected pouches, comprising a first drive motor and a first controller to control the first drive motor and, preferably, a pair of first drive rollers between which the string of interconnected pouches is clamped and associated with the first drive motor, and
   - a first pouch position sensor, preferably an optic sensor, located upstream of the first drive unit, preferably wherein the first pouch position sensor is positioned between the first and second bottom sealing stations, configured to emit a first sensor signal for determining a position relative to the transport direction of the string of interconnected pouches for the purpose of alignment of individual pouches in relation to the one or more bottom sealing units, and
   - a first compensator unit for accommodating and varying a first position of the string of interconnected pouches in order to allow a shift in mutual position between the individual pouches in the string of interconnected pouches at the side edge heat-sealing device and the induvial pouches in the string of interconnected pouches at the bottom heat-sealing device, wherein the first compensator unit is, seen along the transport direction, arranged downstream of the first drive unit and upstream of the side edge heat-sealing device, wherein the first controller of the first drive unit is configured to control the first drive motor on the basis of the first sensor signal to align the individual pouches with the one or more bottom sealing units, and
wherein the first compensator unit is configured to increase or decrease a length of the first portion of the string of interconnected pouches, wherein the first compensator unit comprises, e.g., a plurality of first compensator rollers over which a portion of the string of interconnected pouches is guided and which are moveable to increase or decrease a length.

According to the above embodiment, the pouch production system comprises the bottom heat-sealing device and the side edge heat-sealing device, with the first film material drive unit located in between them, seen along the transport direction. Compared to existing pouch production systems, in which a single film material drive is provided at a far downstream end of the string of interconnected pouches, the first film material drive unit only drives the part of the string of interconnected pouches upstream of and including the bottom heat-sealing device. This results in a reduced length of the part of the string of interconnected pouches that is pulled by the first drive unit and, in accordance, results in a reduced degree of stretching of this part of the string of interconnected pouches. In particular with mono-material, metal-free film materials, such stretch is preferable avoided/reduced as much as possible. As a result, the alignment of the pouches with the bottom sealing jaws may be improved, therewith improving the quality of the sealed pouches.

Furthermore, this embodiment provides for the first pouch position sensor to measure a position of the pouches, which represents a relative position between the pouches and the bottom sealing jaws. The first drive unit is associated with the first pouch position sensor, so as to control the pulling of the string of interconnected pouches in dependence of the measured relative position. In case the measured position indicates that the pouches project somewhat upstream in relation to the bottom sealing member, the first drive unit may be controlled to pull the string of interconnected pouches over a certain length, to move the pouches in alignment with the bottom sealing units, or vice versa in case the pouches project downstream. The first pouch position sensor is located at the bottom heat-sealing device, for example in between the bottom sealing units or in front of/after the bottom sealing units, so that the measured pouch position accurately corresponds/indicates to the actual position of the poches in between the bottom sealing units during sealing of the bottom sealing regions.

A further benefit of this embodiment is that the first pouch position sensor and associated first drive unit may allow the movement of the pouches to be adjusted to the degree of stretching, even though the degree of stretching normally differs per type of sealing device. In the bottom heat-sealing device, portions of the pouches are heated which have four wall layers of film material, i.e. the first and second walls and the two bottom gusset wall parts. This differs from the situation at the side edge heat-sealing device, and possibly at a top edge heat-sealing device, where typically just two walls of film material are heat sealed onto one another. As a result, the stretching in transport direction is likely to differ in the area of these different sealing devices in case just a single downstream film drive unit would be present downstream of all sealing stations. According to an embodiment of the invention, the film drive arrangement allows to adjust the pouch positions in the respective sealing stations in dependence of the actual degree of stretching at said station/device, thus allowing for improved alignment of the pouches relative to the sealing units.

A first compensator unit may be provided to at least temporarily accumulate part of the length of the string of interconnected pouches. In this way, adjustment of the first compensator unit, i.e. changing the length of the part of the string of interconnected pouches in the first compensator unit, may take up excess length or compensate for a shortage in length of the string of interconnected pouches after adjustment of the pouch position, so that the side edge sealing station downstream of the first film material drive unit will not be influenced by the adjustment. Instead, the first compensator unit may allow the pouch position adjustment in the bottom heat-sealing device to be carried out independently of other pouch position adjustments, if any, in other stations of the production system.

In an embodiment, the first compensator unit comprises the first compensator rollers along which the string of interconnected pouches is guided, whereby a change in distance between the first compensator rollers will effect a change in length of the part of the string of interconnected pouches in the first compensator unit.

The first compensator unit may be able to undergo changes in length of the string of interconnected pouches between the first compensator rollers passively, for example where the rollers are pretensioned by elastic members to maintain a certain constant tension in the string of interconnected pouches. Alternatively, or additionally, the first compensator unit may comprise controlled actuators for actively moving the first compensator rollers to adjust the length of the part of the string of interconnected pouches in the first compensator unit.

The production system according to this embodiment may provide for additional synergistic effects, since the combination of dedicated controllable drive assemblies downstream of each of the sealing assemblies and the overlap in bottom sealing and side edge sealing may provide for improved sealing quality of the pouches, whereas the relatively low degree of stretching will prevent the film material, especially mono-material film materials, from rupturing during pulling, without the need to extend the overall length of the production system compared to the state of the art.

In a further embodiment, wherein the production system comprises the side edge heat-sealing device, located downstream of the bottom heat-sealing device and the first film material drive unit, the first film material drive unit further comprises a first compensator unit for accommodating and varying a first portion of the string of interconnected pouches in order to allow a shift in mutual position between the individual pouches in the string of interconnected pouches at the side edge heat-sealing device and the individual pouches in the string of interconnected pouches at the bottom heat-sealing device, and
wherein the first compensator unit comprises a plurality of first compensator rollers over which a portion of the string of interconnected pouches is guided and which are movable to increase or decrease a length of the first portion of the string of interconnected pouches between the bottom heat-sealing station and the side edge heat-sealing station.

In this embodiment, the alignment of the pouches at the bottom heat-sealing device can be adjusted and excess lengths of the string of interconnected pouches can be accumulated or released, depending on the required alignment.

In an embodiment, the film material drive comprises a master drive unit which is configured and operated to pull a downstream end of the string of interconnected pouches, e.g. just upstream of a cutting device, which cutting device is configured and operated to cut individual pouches from the string of interconnected pouches, in practical embodiments having knife blades severing two pouches by cutting between the adjoining sealed side edges.

In an embodiment, the production system further comprises one or more of:
- a film supply assembly which is configured to receive one or more rolls of flexible heat-sealable film material and configured to supply the film material,
- a bottom gusset folding assembly which is configured to fold the film material from a single roll into a folded shape such that the first and second wall and the bottom gusset are formed.

In an embodiment, the production system further comprises one or more of:
- a cooling unit along the path of the string of interconnected pouches and configured to cool the heat-sealed pouches, preferably wherein the cooling unit is arranged downstream of the heat-sealing devices,
- a die cut unit along the path of the string of interconnected pouches and configured to trim a contour of the pouches and/or to punch a hole into the pouches,
- a filling station configured to fill a product into the individualized pouches, e.g. via the spout,
- a filling station (configured to fill a product into the individualized pouches,
- a top edge sealing station which is configured to heat-seal a top edge region, alternatively a spout placing and top edge sealing station which is configured to place a spout in a top edge region between first and second walls of the individualized pouches and to heat-seal the top edge region once the spout is placed.

In an embodiment, the production system forms an integrated packaging machine for forming, filling and sealing a flexible pouch, e.g. a horizontal form-fill-seal packaging machine. In an embodiment, the packaging machine comprises a modular frame, wherein the different devices, e.g. bottom heat-sealing device, cutting device, etc., units, e.g. cooling unit, die cut unit, etc., are interchangeably arranged on the modular frame.

In an embodiment, the production system forms a packaging production line for forming, filling and sealing a flexible pouch, wherein the different devices, e.g. bottom heat-sealing device, cutting device, etc., units, e.g. cooling unit, die cut unit, etc., are placed in line with each other as to form the packaging line.

For example, the pouch body is made from metal-free plastic film material. For example, the film material of the pouch body is a multi-layer material where one and the same plastic, but with different properties, is found in all layers. In another embodiment, the film is a monolayer film. The absence of a metal layer allows for more effective recycling. In an embodiment, the film material, preferably the metal-free film material, comprises one or more layers each comprising or consisting of polyethylene (PE), for example high-density polyethylene (HDPE), low-density polyethylene (LDPE), and/or polypropylene (PP), and/or polyethylene terephthalate (PET). The film material may comprise a mixture of two or more of these polymers, a laminate with one or more layers each consisting of one or more polymers, or a single layer with a single one of these polymers. These polymers may have different properties, for example in terms of mechanical strength and/or sealing capabilities, which may all be used to obtain a suitable material for the pouch body.

In an embodiment, the film material is made entirely from polyethylene (PE), for example high-density polyethylene (HDPE) and/or low-density polyethylene (LDPE), polypropylene (PP), or polyethylene terephthalate (PET). According to this embodiment, the film material consists of a single type of polymer, e.g. a mono-material, which may optionally allow the film material to consist of a single polymeric layer. The use of only a single polymer may improve the recyclability of the pouch, since it may no longer be required to separate the various polymers, since the pouch wall only comprises a single polymer. Also any metal layer is absent.

In an embodiment, the film material includes a layer of ethylene vinyl alcohol (EVOH) as an oxygen barrier, e.g. for food packaging, e.g. as a substitute for a metal layer in the film which is preferably absent. A film material with a single type of polymer as defined above may still comprise a certain amount of EVOH, typically up to 5 wt%, whilst still being characterized as a mono-material.

According to the first aspect, the invention further provides a packaging machine for forming, filling and sealing a flexible pouch, e.g. a horizontal form-fill-seal packaging machine, according to claim 12, comprising the production system as described herein.

According to the first aspect, the invention further provides a packaging production line according to claim 13 for forming, filing and sealing a flexible pouch, comprising the production system as described herein.

According to the first aspect, the invention further provides a method according to claim 14. In an embodiment, the method further comprises:
- moving the string of interconnected pouches in the transport direction so that the group is arranged at the first side edge sealing station,
- operating the first side edge sealing station so that each side edge sealing unit of the first side edge sealing station, in a cycle, heat-seals the first side edge of a first pouch of the group and the adjoining second side edge of a second pouch upstream adjacent of said first pouch,
- moving the string of interconnected pouches in the transport direction so that the group is arranged at the second side edge sealing station,
- operating the second side edge sealing station so that each side edge sealing unit of the second side edge sealing station, in a cycle, heat-seals the second side edge of a first pouch of the group and the adjoining first side edge of a second pouch downstream adjacent of said first pouch.

In an embodiment, a group is formed by four adjacent pouches in the string of interconnected pouches, the group having two first pouches and two second pouches, wherein the string of interconnected pouches is intermittently moved in steps of four discrete pouch positions from the first bottom sealing station to the second bottom sealing station, and possibly, from the first side edge sealing station to the second side edge sealing station.

In an embodiment, the method further comprises one or more of the following steps:
- supplying a roll of flexible heat-sealable film material,
- folding the film material unrolled from a single roll into a folded shape such that the first and second wall and the bottom gusset are formed.

In an embodiment, the method further comprises one or more of the following steps:
- operating a cutting device, e.g. downstream of a master drive unit, which cutting device is configured to cut individual pouches from the string of interconnected pouches,
- operating a die cut unit arranged along the path of the string of interconnected pouches and configured to trim a contour of the pouches.

In an embodiment, the method further comprises one or more of the following steps:
- placing a spout between the first and second walls of the pouches and sealing the pouch at said location, e.g. at the top of the pouch or in a corner region at the top, and sealing the pouch,
- filling the pouches with a product, e.g. a food product, e.g. via the spout,
- operating a closure application station configured to apply a closure on the spout.

The invention further relates to a bottom sealing unit according to claim 17. Further optional details thereof are discussed herein.

According to a second aspect, the present invention provides a production system for the production of flexible pouches, preferably flexible stand-up pouches comprising a gusset, for example a bottom gusset, made from a heat-sealable film material, preferably a metal-free heat-sealable film material,
wherein the pouches are formed from a string of interconnected pouches, comprising a first wall and a second wall of the film material which are opposed to each other,
wherein the production system comprises:
   - a first heat-sealing device, for example a bottom heat-sealing device configured to heat-seal one or more first regions, e.g. bottom regions of one or more of the pouches, wherein the first heat-sealing device comprises one or more first sealing units, e.g. bottom sealing units,
   - a second heat-sealing device, for example a side edge heat-sealing device configured to heat-seal one or more second regions, e.g. side edge regions of one or more of the pouches,
wherein the second heat-sealing device comprises one or more second sealing units, e.g. side edge sealing units, and
   - a film material drive, configured to pull the string of interconnected pouches past the first heat-sealing device and the second heat-sealing device in a transport direction,
wherein the second heat-sealing device is, seen along the transport direction, arranged downstream of the first heat-sealing device along the transport direction,
wherein the film material drive comprises a master film material drive device which comprises a master drive unit, which is, seen along the transport direction, arranged downstream of the second heat-sealing device and which is configured to pull a downstream end of the string of interconnected pouches,
wherein the film material drive further comprises a first film material drive device, which comprises:
   - a first drive unit for pulling the string of interconnected pouches, comprising a first drive motor and a first controller to control the first drive motor, for example the first motor is associated with a pair of first drive rollers between which the string of interconnected pouches is clamped, wherein the first drive unit is, seen along the transport direction, arranged downstream of the first heat-sealing device and upstream of the second heat-sealing device,
   - a first pouch position sensor, located upstream of the first drive unit, configured to emit a first sensor signal for determining a position relative to the transport direction of the string of interconnected pouches for the purpose of alignment of individual pouches in relation to the one or more first sealing units, preferably the first pouch position sensor is an optic sensor that faces the first or second wall of the film material for detecting optic marks, for example eye marks, on some or each of the pouches, and
   - a first compensator unit for accommodating and varying a first portion of the string of interconnected pouches in order to allow a shift in mutual position between:
      the individual pouches in the string of interconnected pouches at the first sealing device, and
      • the individual pouches in the string of interconnected pouches at the second sealing device ,
         wherein the first compensator unit is, seen along the transport direction, arranged downstream of the first drive unit and upstream of the second heat-sealing device,
wherein the first controller of the first drive unit is configured to control the first drive motor on the basis of the first sensor signal to align the individual pouches with the one or more first sealing units, and
wherein preferably the first compensator unit comprises a plurality of first compensator rollers over which the first portion of the string of interconnected pouches is guided and which are movable to increase or decrease a length of the first portion of the string of interconnected pouches guided over the first compensator rollers.

According to the second aspect of the present invention, the pouch production system comprises the bottom heat-sealing device and the side edge heat-sealing device, having the first film material drive device located in between them, seen along the transport direction. Compared to existing pouch production systems, in which a single drive is provided at a far downstream end of the string of interconnected pouches, the first film material drive device only drives the part of the string of interconnected pouches upstream of and including the bottom heat-sealing device. This reduces the length of the part of the string of interconnected pouches that is pulled by the first drive unit and, in accordance, reduces the degree of stretching of this part of the string of interconnected pouches. In particular with mono-material, metal-free film materials, such stretch is preferable avoided as much as possible. As a result, the alignment of the pouches with the bottom sealing jaws may be improved, therewith improving the quality of the sealed pouches.

Furthermore, the second aspect of the invention provides for the first pouch position sensor to measure a position of the pouches, which represents a relative position between the pouches and the bottom sealing jaws. The first drive unit is associated with the first pouch position sensor, so as to control the pulling of the string of interconnected pouches in dependence of the measured relative position. In case the measured position indicates that the pouches project somewhat upstream in relation to the bottom sealing unit, the first drive unit may be controlled to pull the string of interconnected pouches over a larger length, to move the pouches in alignment with the bottom sealing units, or vice versa in case the pouches project downstream. The first pouch position sensor is located at the bottom heat-sealing device, for example in between the bottom sealing unit or in front of the bottom sealing units, so that the measured pouch position accurately indicates the actual position of the pouches at the bottom sealing units for the sealing of the bottom sealing regions.

A further benefit of the second aspect is that the first pouch position sensor and associated first drive unit may allow the movement of the pouches to be adjusted to the degree of stretching, even though the degree of stretching normally differs per type of sealing device. Hence, in the bottom heat-sealing device, parts of the pouches are heated that normally comprise four layers of film material, i.e. two other walls and two bottom gusset walls. This differs from side edge heat-sealing devices or top edge sealing devices, where typically two layers of film material are provided. As a result, the stretching will be different between these sealing devices when a single downstream drive unit were to be provided. According to the present invention, the pouch positions in the respective sealing devices are adjusted in dependence of their degree of stretching, thus allowing for improved alignment in all sealing devices.

Throughout the application, the wording of first heat-sealing device and bottom heat-sealing device are used interchangeably. Likewise, the wording of second heat-sealing device and side edge heat-sealing device are used interchangeably as well. It is to be understood that the side edge heat-sealing device may be positioned upstream of the bottom heat-sealing device, but that the invention also encompasses a reverse order, e.g. with the bottom heat-sealing device being positioned upstream of the side edge heat-sealing device, or any order of arrangement of heat-sealing devices. The same applies for the first respectively second sealing units and the bottom respectively side edge sealing units.

The first compensator unit provides to at least temporarily accumulate part of the length of the string of interconnected pouches. In this way, adjustment of the first compensator unit, i.e. changing the length of the part of the string of interconnected pouches in the first compensator unit, may take up excess length or discharge a shortage in length of the string of interconnected pouches after adjustment of the pouch position, so that the side edge heat-sealing device downstream of the first film material drive device will not be influenced by the adjustment. Instead, the first compensator unit may allow the pouch position adjustment in the bottom heat-sealing device to be carried out independently of other pouch position adjustments, if any, in other stations of the production system.

The first compensator unit may comprise the first compensator rollers along which the string of interconnected pouches is guided, whereby a change in distance between the first compensator rollers will effect a change in length of the part of the string of interconnected pouches in the first compensator unit.

The first compensator unit may be able to compensate changes in length of the string of interconnected pouches between the first compensator rollers passively, for example where the rollers are pretensioned by elastic members to maintain a certain constant tension in the string of interconnected pouches. Alternatively or additionally, the first compensator unit may comprise controlled actuators for actively moving the first compensator rollers to adjust the length of the part of the string of interconnected pouches in the first compensator unit.

The production system according to the first and second aspect of the invention, as well as the associated method, may be readily combined within the teaching of the present application. Features and/or benefits disclosed herein in relation to the first aspect of the invention may apply for the second aspect of the invention and vice versa.

The invention will now be discussed with reference to the figures. In the figures:
Fig. 1 shows highly schematically an embodiment of the production system according to the present invention,
Figs. 2a - b show a front view of the pouch,
Fig. 3 shows schematically a cross-section of the bottom gusset of the pouch shown in Figs. 2a-b,
Figs. 4a - b show different views of a bottom sealing unit,
Fig. 4c shows schematically a side edge sealing unit,
Figs. 5a - b show a schematic view of a group of pouches being heat sealed by the first and second bottom sealing stations,
Figs. 6a - b show a schematic view of a group of pouches being heat sealed by the first and second side edge sealing stations.

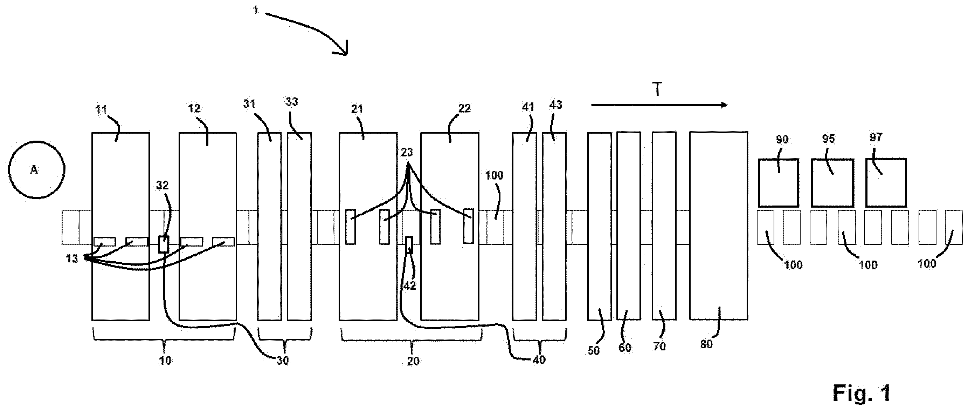

Figure 1 shows schematically the production system 1 for the production of flexible stand-up pouches 100 having a pouch body which is made from a heat-sealable film material.

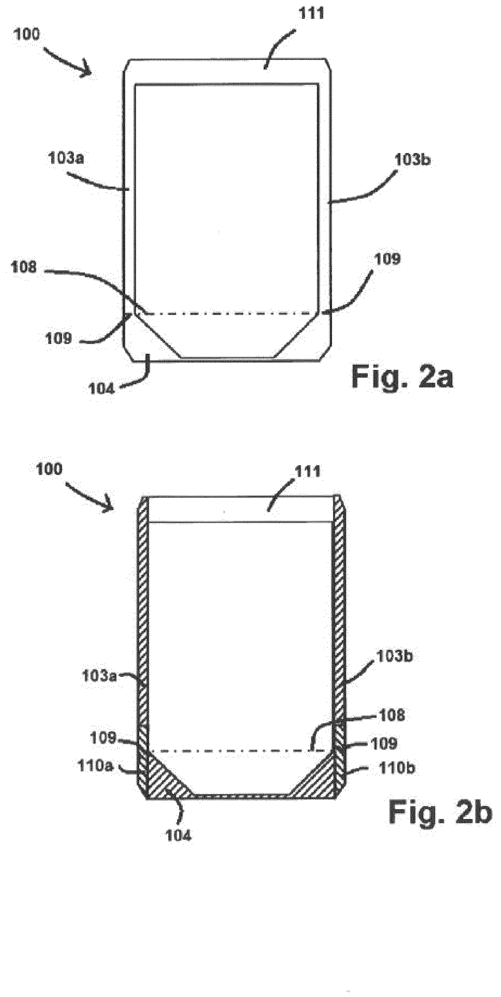

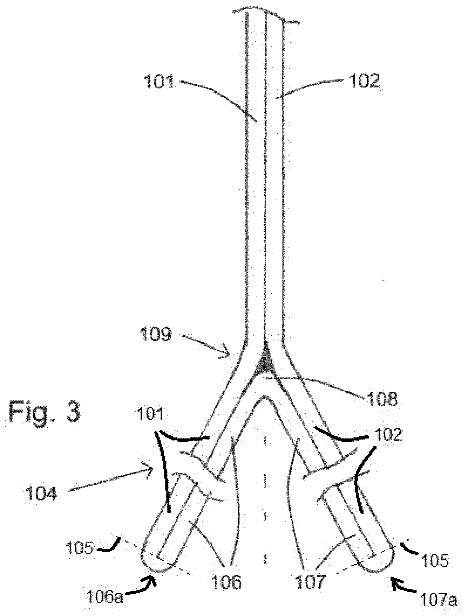

As shown, e.g. in Figures 2a-b and 3, each produced pouch 100 has a pouch body with a first wall 101 and a second wall 102, the first wall 101 and the second wall 102 being opposed to each other. These walls could also be called the main walls of the pouch.

The pouch 100 has a first side edge 103a and a second side edge 103b, and a top edge region 111.

For example, not shown, a spout with closure device is present at the top of the pouch 100. For example, a plastic spout has an attachment portion which is heat-sealed between opposed top edges of the walls 101, 102. Examples are disclosed in WO03/031280, WO2014/007612, WO2017/135824, WO2021/160675, WO2022/079154, etc.

The pouch 100 further comprises a bottom gusset at the bottom side, e.g. to form a flexible stand-up pouch.

The bottom gusset includes a first bottom gusset wall part 106 and a second bottom gusset wall part 107 which are connected to each other along a folding line 108. The bottom gusset is generally located below the folding line 108 and between the first wall 101 and the second wall 102.

In this example, the bottom gusset is embodied as a folded bottom gusset with the walls 101, 102, and the wall parts 106, 107 forming one continuous web of film material.

For example, the production system 1 comprises at the position A in Figure 1 a film supply device which is adapted to receive one or more rolls of flexible heat-sealable film material. The film material is unwound from a roll and passes to a bottom gusset folding device to fold the film material dispensed from a roll into a folded shape, so that two pouch walls 101, 102 oppose one another and so that the bottom has a bottom gusset. This is known in the art.

It is noted that, in embodiments, the production system may also be configured such that each of the side walls 101, 102, as well the bottom gusset with portions 106, 107, are made from distinct webs of film material as depicted in Figure 3 with dashed lines 105.

As shown, preferably, the production system 1 has a horizontal path and transport direction T along the devices and stations of the system.

As is known in the art, a triple point 109 is present at each side edge 103a, 103b of the pouch 100. As can be seen in Figure 3, above the triple point 109 the first wall 101 and the second wall 102 are in direct contact with each other along the side edge. Below the triple point 109 the two gusset wall parts 106, 107 are located between the first wall 101 and the second wall 102. Thus, at the triple point 109 the thickness changes between two times the wall thickness and four times the wall thickness.

The pouches 100 are initially formed from a string of interconnected pouches.

The production system 1 comprises a bottom heat-sealing device 10.

The bottom heat-sealing device 10 has a first bottom sealing station 11 and a second bottom sealing station 12, which are arranged in series in the transport direction T.

Each of the first bottom sealing station 11 and the second bottom sealing station 12 comprises one or more bottom sealing units 13, here a pair of sealing units 13, 13 of station 11 and a pair of sealing units 13 of the station 12.

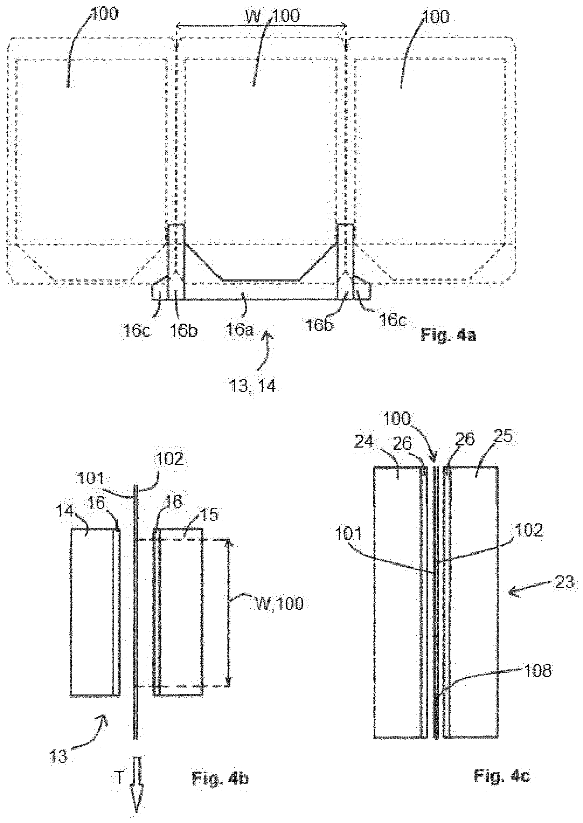

Each bottom sealing unit 13, e.g. as schematically shown in Figures 4a-b, comprises:
- a first bottom sealing jaw 14, and
- a second bottom sealing jaw 15, and
- an actuator device configured to move the first bottom sealing jaw 14 and second bottom sealing jaw 15 relative to one another between an opened position and a clamped position. This may involve each jaw 14, 15 being movable, or one of them being stationary in the direction of clamping/opening and the other one being movable by the actuator device.

In embodiments, each sealing station 11, 12 comprises a main actuator device for multiple bottom sealing units 13 of each station.

The first bottom sealing jaw 14 and the second bottom sealing jaw 15 each comprise a sealing face 16.

Each of the sealing units 13 may be configured and operated such that the sealing faces of the jaws have a constant elevated heat-sealing temperature, e.g. each jaw 14, 15 comprising a heating element, e.g. an electric heating element, to maintain an elevated heat-sealing temperature.

In embodiments, the bottom heat-sealing device 10, station(s) 11, 12, and/or bottom sealing unit(s) 13, comprise(s) a spacer member arranged to keep the gusset wall parts 106, 107 separated from one another during sealing. This could, for example, be a plate-like spacer member.

These sealing faces 16 of the jaws 14, 15 each project across a bottom region 104 of the bottom gusset of one pouch and has a central face portion 16a which extends in the direction of the width W of the pouch between side face portions 16b. Each of the side face portions 16b not only projects across a side edge section 110a, 110b of one of the side edges of the one pouch, but additionally also across an adjacent side edge section 11 0b, 110a of an adjacent pouch, see e.g. Figure 4a.

So, in contrast to traditional prior art arrangements, the sealing faces 16 of a pair of jaws 14, 15 not only heat-seal the side edge sections of one pouch, but also the adjacent side edge section of the pouch upstream and of the pouch downstream of the one pouch, seen in transport direction. As shown here, as preferred, the sealing faces 16 also heat-seal the bottom region of the one pouch.

Herein, each side edge section 110a, 110b which is heat sealed by the pair of jaws 14, 15 extends from below the folding line 108 to above the folding line 108, so over the triple point 109, see figures. In embodiment, such a sealed side edge section 110a, 110b extends from the lower edge to above the folding line 108. In another embodiment, the sealed side edge section starts at a distance from the lower edge 106a, 107a, yet still below the folding line 108.

In Figure 2b the hatching schematically illustrates that a side edge section 110a, 110b extends only over a fraction of the length of the respective side edge above the folding line 108/triple point 109. For example, the length of the section 110a, 110b above the triple point 109 is at least 1 centimeter, e.g. between 1 centimeter and 3 centimeters.

In Figure 2b the hatching above the side edge sections is in a different direction, which serves to illustrate that here the side edge heat-sealing device 20 has applied a single heat-seal between the walls 102 along the side edges 103a, 103b, preferably said heat-seal also extending over the side edge sections 110a, 110b.

Figure 4a serves to illustrate an example of a jaw 14 of a bottom sealing unit 13 in relation to three adjacent pouches 100 of the string of interconnected pouches. Jaw 15 (not shown) may be embodied as jaw 14.

The sealing face 16 includes the following face portions:
- central face portion 16a which serves to heat-seal the side wall of the pouch to the respective bottom gusset wall part across the bottom region 104,
- side face portions 16b adjoining the central face portion 16a downstream and upstream.
Herein the side face portions 16b each are configured to not only heat-seal the side edge section 110a, 110b of the one pouch of which the bottom region 104 is heat-sealed by the jaw, but also to heat-seal the adjoining side edge sections of the two adjoining pouches.

The Figure 4a also illustrates, as optional feature, the presence of lateral extension face portions 16c which extend downstream and upstream away from a face portion 16a and serve to seal a lower edge section at the lower end of the bottom region 104 of the adjacent pouch 100.

The two side face portions 16b are configured to seal side edge sections 110a, 110b of the two side edges 103a, 103b of the central pouch in Figure 4a and to simultaneously seal side edge sections 110a, 110b of adjacent side edges 103a, 103b of two adjacent pouches 100 in Figure 4a. As shown, the side edge sections 110 here extend from a lower edge of the pouch to a location above the folding line 108, yet only over a fraction or minor part of the side edge.

So, when the actuator device moves the jaws 14, 15 of a unit 13 into the clamped position, the sealing faces 16 of the jaws 14, 15 cause heat-sealing in the following regions:
- the first wall 101 and the second wall 102 of one pouch 100 are sealed directly together in the side edge section 110a, 110b above the triple point 109,
- the first wall 101 of the pouch is sealed to the first gusset portion 106 in the side edge section below the triple point 109,
- the second wall 102 of the pouch is sealed to the second gusset portion 107 in a section of the side edge section below the triple point 109,
- the first wall 101 of the pouch is sealed to the first gusset portion 106 in a bottom region 104 which extends between the side edge sections,
- the second wall 102 of the pouch is sealed to the second gusset portion 107 in a bottom region 104 which extends between the side edge sections.

So, each side edge section 110a, 110b extends from below the triple point 109, over the triple point 109, to above the triple point 109.

At the same time, due to the configuration of the jaws 14, 15, there is a heat-sealing in one side edge region of the pouch which is directly adjacent and downstream of the one pouch and in one side edge region of the pouch which is directly adjacent and upstream of the one pouch, seen in the transport direction T. In more detail, this additional heat-sealing concerns:
- sealing directly together - in a portion of side edge section 110a, 110b above the triple point 109 and directly adjacent the one pouch - the first wall 101 and the second wall 102 of the upstream pouch and of the downstream pouch, and
- for each of the upstream pouch and the downstream pouch, sealing the first wall 101 of the pouch to the first gusset portion 106 in a section of the side edge section below the triple point 109,
- for each of the upstream pouch and the downstream pouch, sealing the second wall 102 of the pouch to the second gusset portion 107 in a portion of the side edge section below the triple point 109.

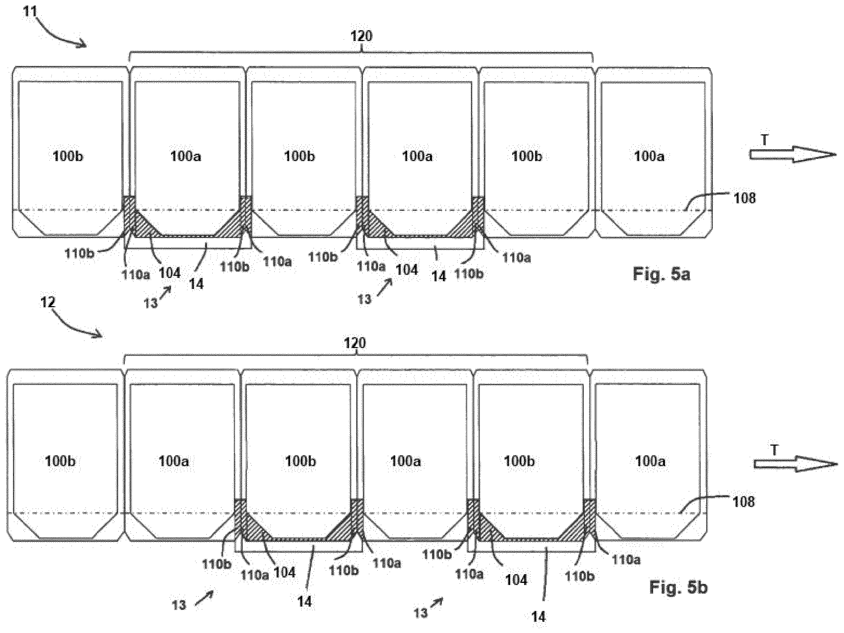

The regions sealed by the bottom sealing jaws 14, 15 of units 13 can be readily recognized in the Figures 5a, 5b, where these regions are indicated by hatching.

The production system 1 further comprises a side edge heat-sealing device 20 configured to heat-seal side edge regions 103a, 103b of the pouches 100.

The side edge heat-sealing device 20 is arranged downstream of the bottom heat-sealing device 10.

The side edge heat-sealing device 20 has a first side edge sealing station 21 and a second side edge sealing station 22. Each of the first side edge sealing station 21 and second side edge sealing station 22 comprises one or more side edge sealing units 23.

Each side sealing unit 23 comprises:
- a first side edge sealing jaw 24,
- a second side edge sealing jaw 25,
- an actuator device configured to move the first and second side edge sealing jaws 24, 25 relative to one another between an opened position and a clamped position.

In embodiments, each sealing station 21, 22 comprises a main actuator device for multiple side edge sealing units 23 of the station.

The first side edge sealing jaw 24 comprises a sealing face 26 which is configured to simultaneously contact and seal the adjoining first and second side edges 103a, 103b of the two adjacent interconnected pouches 100.

The second side edge sealing jaw 25 comprises a sealing face 26 which is configured to simultaneously contact and seal the adjoining first and second side edges 103a, 103b of the two adjacent interconnected pouches 100.

As known in the art, each sealing face 16, 26 may have a non-stick covering, e.g. of PTFE, to avoid or reduce adherence to the film material.

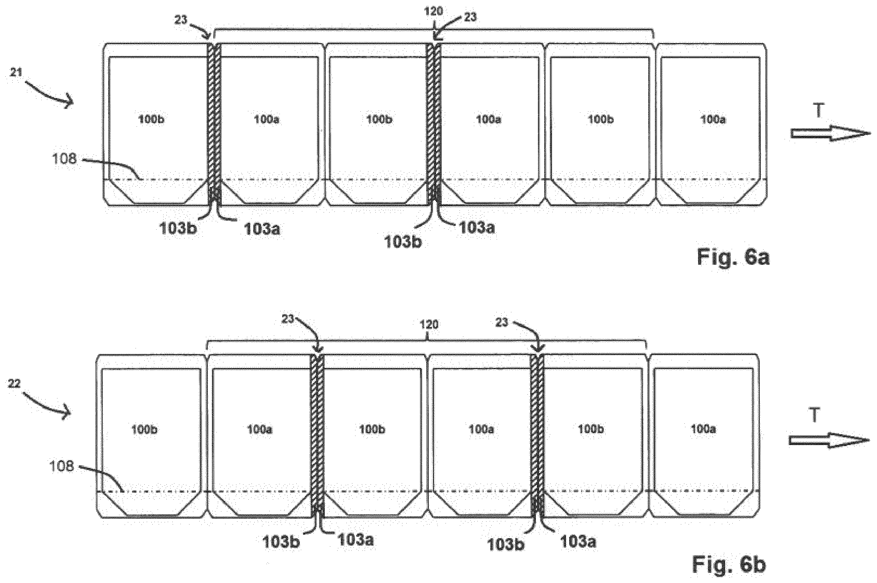

As shown in Figures 1 and 6a-b, the first side edge sealing station 21 and the second side edge sealing station 22 each have two side sealing units 23.

The production system 1 further comprises a film material drive 30, 40, 70, which is configured to pull the string of interconnected pouches past the bottom heat-sealing device 10 and the side edge heat-sealing device 20 in transport direction T.

The side edge heat-sealing device 20 is, seen along the transport direction T, arranged downstream of the bottom heat-sealing device 10.

The film material drive comprises a first film material drive device 30, which is arranged downstream of the bottom heat-sealing device 10 and upstream of the side edge heat-sealing device 20.

The first material drive device 30 comprises:
- a first drive unit 31 for pulling the string of interconnected pouches, comprising a pair of first drive rollers between which the string of interconnected pouches is clamped and an associated first drive motor,
- a first pouch position sensor 32, located upstream of the first drive unit 31, configured to emit a first sensor signal for determining alignment positions of individual pouches 100 in the string of interconnected pouches in relation to the one or more bottom sealing units 13, and
- a first compensator unit 33 for accommodating and varying a first position of the string of interconnected pouches in order to allow a shift in mutual position between the individual pouches 100 in the string of interconnected pouches at the side edge heat-sealing device 20 and the individual pouches 100 in the string of interconnected pouches at the bottom heat-sealing device 10.

The first drive device 30 is configured to control the first drive motor on the basis of the first sensor signal to align the individual pouches with the bottom sealing units 13.

The first compensator unit 33 comprises a plurality of movable first compensator rollers over which a portion of the string of interconnected pouches is guided and which are movable to increase or decrease a length of the portion of the string of interconnected pouches guided over the first compensator rollers.

In an embodiment, the first pouch position sensor 32 is an optic sensor, for example a photocell, which faces the first or second wall 101, 102 of the film material for detecting optic marks, for example eye marks, on some or each of the pouches 100.

The first pouch position sensor 32 is positioned in between the first and second bottom sealing station 11, 12.

A second film material drive device 40 is arranged downstream of the side edge heat-sealing device 20. The second film material drive device 40 comprises:
- a second drive unit 41 for pulling the string of interconnected pouches, comprising a pair of second drive rollers between which the string of interconnected pouches is clamped and an associated second drive motor, and
- a second pouch position sensor 42, located upstream of the second drive unit 41, configured to emit a second sensor signal for determining alignment positions of individual pouches 100 in the string of interconnected pouches in relation to the one or more side edge sealing units 23.

The second drive device 40 is configured to control the second drive motor on the basis of the second sensor signal to align the individual pouches with the one or more side edge sealing units 23.

In an embodiment, the second pouch position sensor 42 is an optic sensor, for example a photocell, which faces the first or second wall 101, 102 of the film material for detecting optic marks, for example eye marks, on some or each of the pouches 100.

The second pouch position sensor 42 is positioned in between the first and second side edge sealing stations 21, 22.

The second film material drive device 40 further comprises a second compensator unit 43 for accommodating and varying a second portion of the string of interconnected pouches in order to allow a shift in mutual position between the individual pouches 100 in the string of interconnected pouches at the top edge sealing device 90 and the individual pouches in the string of interconnected pouches at the side edge heat-sealing device 20.

The second compensator unit 43 comprises a plurality of second compensator rollers over which a portion of the string of interconnected pouches is guided and which are movable to increase or decrease a length of the portion of the string of interconnected pouches guided over the second compensator rollers.

The second drive device 40 is controllable independently of the first drive device 30 to accommodate for a second stretching elongation of the first and second walls 101, 102 of film material in the side edge heat-sealing device 20, different from the first stretching elongation.

In an embodiment, the production system 1 may further comprise one or more of the following at the starting end of system, see at A in Figure 1:
- a film supply assembly which is configured to receive one or more rolls of flexible heat-sealable film material and configured to supply the film material,
- a bottom gusset folding assembly which is configured to unroll the film material supplied from a single roll into a folded shape such that the first and second walls 101, 102 and the bottom gusset are formed.

In an embodiment, the production system 1 may further comprise one or more of the following downstream of the heat-sealing device(s) 10, 20 along the path of the interconnected pouches:
- a cooling unit 50 configured to cool the pouches, in particular the heat-sealed regions of the pouches, e.g. wherein the cooling unit is arranged downstream of the side edge heat-sealing device 20,
- a die cut unit 60 configured to trim a contour of the pouches,
- a master drive unit 70 as part of the film drive and configured to pull a downstream end of the string of interconnected pouches.

In embodiments, the production system 1 may further comprise one or more of the following downstream devices/stations:
- a cutting device 80, e.g. downstream of the master drive unit 70, which cutting device 80 is configured to cut individual pouches from the string of interconnected pouches, e.g. making cuts to cut all pouches of a group into individualized pouches,
- a spout placing and top edge sealing station 90 which is configured to place a spout between top edge regions or top corner regions of the first and second walls 101, 102 of the individualized pouches and to heat-seal the top edge region,
- a filling station 95 configured to fill a product into the individualized pouches, e.g. via the spout,
- a closure application station 97 configured to apply a closure on the spout.

With reference to Figures 5a-b and 6a-b, in the shown embodiment, four pouches 100 form a group 120. Each group 120 of four pouches 100 has two first pouches 100a and two second pouches 100b arranged in alternating sequence.

As follows form Figures 5a and 5b, use can be made of the production system 1 such that:
- now referring to Figure 5a, the group 120 of first and second pouches 100a, 100b is arranged at the first bottom sealing station 11,
- the first bottom sealing station 11 is operated so that each bottom sealing unit 13 of the first bottom sealing station 11, in a cycle, heat-seals:
   - the bottom region 104 of a first pouch 100a of the group 120,
   - the first side edge section 110a of the first side edge 103a and the second side edge portion 110b of the second side edge 103b of said first pouch 100a of the group 120,
   - the second side edge section 110b of the adjoining second side edge 103b of the second pouch 100b adjacent upstream to said first pouch 100a of the group 120,
   - the first side edge section 110a of the adjoining first side edge 103a of the second pouch 100b adjacent downstream to said first pouch 100a of the group 120,
- the string of interconnected pouches is then moved in the transport direction so that the group 120 is arranged at the second bottom sealing station 12, as shown in Figure 5b,
- to further establish the seals of the pouches of the group 120, the second bottom sealing station 12 is then operated so that each bottom sealing unit 13 of the second bottom sealing station 12, in a cycle, heat-seals:
   - the bottom region 104 of a second pouch 100b of the group 120,
   - the first side edge section 110a of the first side edge 103a and the second side edge section 110b of the second side edge 103b of said second pouch 100b of the group 120,
   - the second side edge section 110b of the adjoining second side edge 103b of the first pouch 100a adjacent upstream of said second pouch 100b of the group 120,
   - the first side edge section 110a of the adjoining first side edge 103a of the first pouch 100a adjacent downstream of said second pouch 100b of the group 120.

In Figures 5a - b, the hatched regions of the pouches are the regions of the pouch which are sealed by the bottom sealing units 13.

The bottom heat-sealing device 10 is configured to seal each pouch 100 such that the first and second side edge sections 110a, 110b are sealed in at least two different, preferably consecutive cycles, e.g. at least being sealed in a first cycle with the first bottom sealing station 11 and in a second cycle with the second bottom sealing station 12.

The first and second side edge section 110a, 110b of each pouch 100 extend from a lower edge of the pouch to a location above the folding line 108.

The side edge heat-sealing device 20 of the production system 1 is configured to seal the side edges 103a, 103b of the pouches 100, such that the side edge sections 110a, 110b are sealed three times in total.

As shown the side edge heat-sealing device 20 is positioned downstream of the bottom heat-sealing device 10. The pouches 100 are first sealed by the bottom heat-sealing device 10 and then by the side edge heat-sealing device 20. This results in a sealed pouch as shown in Figure 2b, wherein the bottom region 104 of each pouch 100 is sealed once by the bottom heat-sealing device 10, wherein the portion of the side edges 103a, 103b which are located above the side edge sections 110a, 110b are sealed once by the side edge heat sealing device 20. The side edge sections 110a, 110b of each pouch 100 is sealed three times, twice by the bottom heat sealing device 10 and once by the side edge heat sealing device 20. The triple points 109 are thus sealed three times.

As shown in Figures 6a and 6b, the sealing of the group 120 of pouches, further comprises:
- moving the string of interconnected pouches in the transport direction T so that the group 120 is arranged at the first side edge sealing station 21, as shown in Figure 6a,
- operating the first side edge sealing station 21 so that each side edge sealing unit 23 of the first side edge sealing station 21, in a cycle, heat-seals the first side edge 103a of a first pouch 100a of the group 120 and the adjoining second side edge 103b of a second pouch 100b upstream adjacent to said first pouch,
- moving the string of interconnected pouches in the transport direction T so that the group 120 is arranged at the second side edge sealing station 22, as shown in Figure 6b,
- operating the second side edge sealing station 22 so that each side edge sealing unit 23 of the second side edge sealing station 22, in a cycle, heat-seals the second side edge 103b of a first pouch 100a of the group 120 and the adjoining first side edge 103a of a second pouch 100b downstream adjacent to said first pouch.

In an embodiment, the sides of the bottom gusset are sealed together either by the bottom heat-sealing device 10 or by the side edge heat-sealing device 20.

The second aspect of the invention further relates to a method for producing flexible pouches 100 made from a heat-sealable material, wherein use is made of a production system 1, wherein the method comprises the steps of:
- pulling, with the film material drive 30, 40, 70 the string of interconnected pouches past the bottom heat-sealing device 10 and the side edge heat-sealing device 20 in a transport direction T,
- heat sealing with the bottom heat-sealing device 10,
- heat sealing with the side edge heat-sealing device 20,
wherein the step of pulling comprises the steps of:
- determining, with the first pouch position sensor 32 of the first film material drive device 30, alignment positions of individual pouches 100 in the string of interconnected pouches in relation to the one or more bottom sealing units 13 and emitting a first sensor signal on the basis thereof,
- controlling the first drive unit 31, e.g. the first drive motor thereof, of the first film material drive unit 30 on the basis of the first sensor signal to align the individual pouches 100 with the one or more bottom sealing units 13, and
- guiding a portion of the string of interconnected pouches over the plurality of first compensator rollers of the first compensator unit 33 and allowing the first compensator rollers to move to increase or decrease a length of the portion of the string of interconnected pouches guided along the first compensator rollers and to accommodate and vary a portion of the string of interconnected pouches in order to allow a shift in mutual position between the individual pouches in the string of interconnected pouches at the side edge heat-sealing device 20 and the individual pouches in the string of interconnected pouches at the bottom heat-sealing device 10.

In an embodiment, the method further comprises the following steps:
- determining, with the second pouch position sensor 42 of the second film material drive device 40, alignment positions of individual pouches in the string of interconnected pouches in relation to the one or more side edge sealing units 23 and emitting a second sensor signal on the basis thereof, and
- controlling the second drive unit 41, e.g. the second drive motor thereof, of the second film material drive device 40 on the basis of the second sensor signal to align the individual pouches 100 with the one or more side edge sealing units 23.

In an embodiment, the controlling of the second drive unit 41 is carried out independently of the controlling of the first drive unit 31, to accommodate for a first stretching elongation of the first and second walls of film material in the bottom heat sealing device 10 and a second stretching elongation of the first and second walls of film material in the side edge heat-sealing device 20, different from the first stretching elongation.

## Claims

1. A production system (1) for the production of flexible pouches (100), preferably flexible stand-up pouches, the pouches each having a pouch body made from heat-sealable film material, preferably a metal-free heat-sealable film material, wherein the production system comprises a bottom heat-sealing device (10),
wherein each pouch body comprises:
- a first wall (101) and a second wall (102) which are opposed to each other,
- a bottom gusset which comprises a first bottom gusset wall part (106) and a second bottom gusset wall part (107) connected to each other along a folding line (108), wherein the bottom gusset is located between the first wall (101) and the second wall (102), and
- a first side edge (103a) and a second side edge (103b),
wherein the production system comprises a film material drive (30, 40, 70) which is configured to transport a string of interconnected pouches (100) during production thereof along at least the bottom heat-sealing device (10) in a transport direction (T), e.g. intermittently,
wherein the string of interconnected pouches comprises first pouches (100a) and second pouches (100b), wherein the first and second pouches (100a, 100b) are alternating, and wherein one or more first pouches (100a) and one or more second pouches (100b) form a group (120), e.g. wherein two first pouches (100a) and two second pouches (100b) form a group,
wherein the bottom heat-sealing device (10) comprises a first bottom sealing station (11) and a second bottom sealing station (12) arranged downstream of the first bottom sealing station in the transport direction (T),
wherein each of the first and second bottom sealing stations (11, 12) comprises one or more bottom sealing units (13), e.g. two units (13), wherein each bottom sealing unit (13) comprises:
- a first bottom sealing jaw (14),
- a second bottom sealing jaw (15),
wherein the bottom heat-sealing device (10), e.g. each bottom sealing station (11, 12), e.g. each bottom sealing unit (13), comprises an actuator device configured to move the first and/or second bottom sealing jaws relative to one another between an opened position and a clamped position,
wherein the first and second bottom sealing jaws (14, 15) each have a sealing face (16) comprising side face portions (16b) configured to project across a first side edge section (110a) of the first side edge (103a) and a second side edge section (11 0b) of the second side edge (103b) of said pouch, as well as across an adjoining side edge section (110b, 110a) of each adjacent pouch,
wherein the side edge sections (110a, 11 0b) each extend from below to above the folding line (108),
wherein each bottom sealing unit (13) of the first bottom sealing station (11) is configured to, in a cycle, heat-seal:
- the first side edge section (110a) of the first side edge (103a) and the second side edge section (110b) of the second side edge (103b) of said first pouch (100a) of the group (120),
- a second side edge section (110b) of the adjoining second side edge (103b) of the second pouch (100b) adjacent upstream to said first pouch (100a) of the group (120),
- a first side edge section (110a) of the adjoining first side edge (103a) of the second pouch (100b) adjacent downstream to said first pouch (100a) of the group (120),
wherein each bottom sealing unit (13) of the second bottom sealing station (12) is configured to, in a cycle, heat-seal:
- the first side edge section (110a) of the first side edge (103a) and the second side edge section (110b) of the second side edge (103b) of said second pouch (100b) of the group (120),
- a second side edge section (110b) of the adjoining second side edge (103b) of the first pouch (100a) adjacent upstream to said second pouch (100b) of the group (120),
- a first side edge section (110a) of the adjoining first side edge (103a) of the first pouch (100a) adjacent downstream to said second pouch (100b) of the group (120).

2. Production system according to claim 1, wherein the sealing face (16) of each of the first and second bottom sealing jaws (14, 15) further comprises a central face portion (16a) configured to project across a bottom region (104) of the bottom gusset of a pouch, and wherein each bottom sealing unit (13) of the first bottom sealing station (11) is configured to, in the cycle, also heat-seal:
- the bottom region (104) of said first pouch (100a) of the group (120),
wherein each bottom sealing unit (13) of the second bottom sealing station (12) is configured to, in the cycle, also heat-seal:
- the bottom region (104) of said second pouch (100b) of the group (120).

3. Production system according to claim 1 or 2, wherein the film material drive (30, 40, 70) is configured to move the interconnected string of pouches (100) intermittently along the transport direction (T), wherein, in use, the string of interconnected pouches is transported intermittently over one or more discrete pouch positions in the transport direction.

4. Production system according to any one or more of claims 1 - 3, wherein the production system further comprises a side edge heat-sealing device (20) which is configured to heat-seal the side edges (103a, 103b) of the pouches (100), wherein the film material drive (30, 40, 70) is configured to transport the string of interconnected pouches (100) during production thereof also along the side edge heat-sealing device (20) in the transport direction (T), preferably wherein the side edge heat-sealing device (20) is arranged downstream of the bottom heat-sealing device (10).

5. Production system according to claim 4, wherein the side edge heat-sealing device (20) comprises a first side edge sealing station (21) and a second side edge sealing station (22), wherein each of the first and second side edge sealing stations comprises one or more side edge sealing units (23), e.g. two units (23), wherein each side edge sealing unit comprises:
- a first side edge sealing jaw (24),
- a second side edge sealing jaw (25),
wherein each side edge sealing station, e.g. each side edge sealing unit, comprises an actuator device configured to move the first and/or second side edge sealing jaws relative to one another between an opened position and a clamped position,
wherein the first and the second side edge sealing jaw (24, 25) each comprises a sealing face (26) which is configured to project across adjoining first and second side edges (103a, 103b) of two adjacent pouches (100a, 100b),
wherein each side edge sealing unit (23) of the first side edge sealing station (21) is configured to, in a cycle, heat-seal the first side edge (103a) of a first pouch (100a) of the group (120) and the adjoining second side edge (103b) of a second pouch (100b) adjacent upstream of said first pouch,
wherein each side edge sealing unit (23) of the second side edge sealing station (22) is configured to, in a cycle, heat-seal the second side edge (103b) of a first pouch (100a) of the group (120) and the adjoining first side edge (103a) of a second pouch (100b) adjacent downstream of the said first pouch.

6. Production system according to any one or more of claims 1 - 5, wherein two first pouches (100a) and two second pouches (100b) form the group (120), and wherein the first and second bottom sealing stations (11, 12) each have two bottom sealing units (13), and wherein the film material drive (30, 40, 70) is configured to transport the interconnected string of pouches intermittently over four discrete pouch positions in the transport direction (T).

7. Production system according to any one or more of claims 4 - 6, wherein each of the first and second side edge sealing stations (21, 22) has two side edge sealing units (23),
wherein the two side edge sealing units (23) of the first side edge sealing station (21) are configured to heat-seal the first side edges (103a) of two first pouches (100a) of the group (120) and the adjoining second side edges (103b) of the second pouches (100b) adjacent upstream of said first pouches,
wherein the two side edge sealing units (23) of the second side edge sealing station (22) are configured to heat-seal the second side edges (103b) of two first pouches (100a) of the group (120) and the adjoining first side edges (103a) of the second pouches (100b) adjacent downstream of said first pouches.

8. Production system according to any one or more of claims 4 - 7, wherein the side edge heat-sealing device (20) is arranged downstream of the bottom heat-sealing device (10).

9. Production system according to any one or more of claims 1-8, wherein the first and second bottom sealing stations (11, 12), and optionally also the first and second side edge sealing stations (21, 22), are mounted on a common frame and are each positionable relative to the frame along the transport direction (T), e.g. each sealing unit being independently positionable relative to the frame, e.g. to allow for adjustment to different pouches, e.g. different pouch sizes.

10. Production system according to claim 8 or 9, wherein the film material drive (30,40,70) is configured to pull the string of interconnected pouches past the bottom heat-sealing device (10) and the side edge heat-sealing device (20) along the transport direction (T),
and wherein the film material drive comprises a first film material drive device (30), which is arranged downstream of the bottom heat-sealing device (10) and upstream of the side edge heat-sealing device (20), and which comprises:
- a first drive unit (31) for pulling the string of interconnected pouches, e.g. the first drive motor is associated with a pair of first drive rollers between which the string of interconnected pouches is clamped, and
- a first pouch position sensor (32), preferably an optic sensor, located upstream of the first drive unit, preferably wherein the first pouch position sensor is positioned between the first and second bottom sealing stations (11, 12), which first pouch position sensor is configured to emit a first sensor signal for determining alignment positions of individual pouches in the string of interconnected pouches in relation to the bottom sealing units (13), and
- a first compensator unit (33) for accommodating and varying a first position of the string of interconnected pouches in order to allow a shift in mutual position between the individual pouches in the string of interconnected pouches at the side edge heat-sealing device and the individual pouches in the string of interconnected pouches at the bottom heat-sealing device, wherein the first compensator unit is, seen along the transport direction (T), arranged downstream of the first drive unit and upstream of the side edge heat-sealing device.
wherein the first controller of the first film material drive device (30) is configured to control the first drive motor on the basis of the first sensor signal to align the individual pouches with the one or more bottom sealing units (13), and
wherein, preferably, the first compensator unit (33) comprises a plurality of first compensator rollers over which a portion of the string of interconnected pouches is guided and which are movable to increase or decrease a length of the portion of the string of interconnected pouches guided along the first compensator rollers.

11. Production system according to claim 10, wherein the film material drive (30, 40, 70) further comprises a second film material drive device (40), which is, seen along the transport direction, arranged downstream of the side edge heat-sealing device (20), and which comprises:
- a second drive unit (41) for pulling the string of interconnected pouches comprising a second drive motor and a second controller to control the second drive motor, e.g. the second drive motor is associated with a pair of second drive rollers between which the string of interconnected pouches is clamped, and
- a second pouch position sensor (42), preferably an optic sensor, located upstream of the second drive unit, preferably wherein the second pouch position sensor is positioned between the first and second side edge sealing stations (21, 22), which second pouch position sensor is configured to emit a second sensor signal for determining alignment positions of individual pouches in the string of interconnected pouches in relation to the one or more side edge sealing units,
- optionally, a second compensator unit (43) for accommodating and varying a second portion of the string of interconnected pouches, wherein the second compensator unit is, seen along the transport direction (T) arranged downstream of the second drive unit,
wherein the second controller of the second film material drive device (40) is configured to control the second drive motor on the basis of the second sensor signal to align the individual pouches with the one or more side edge sealing units.

12. A packaging machine for forming, filling and sealing a flexible pouch, e.g. a horizontal form-fill-seal packaging machine, comprising the production system according to any one or more of claims 1 - 11, wherein the packaging machine further comprises at least one of the following:
- a cooling unit (50) along the path of the string of interconnected pouches and configured to cool the heat-sealed pouches, preferably wherein the cooling unit is arranged downstream of the heat-sealing devices (10, 20),
- a die cut unit (60) along the path of the string of interconnected pouches and configured to trim a contour of the pouches and/or to punch a hole into the pouches,
- a master drive unit (70) as part of the film material drive and arranged along the path of the string of interconnected pouches and configured to pull a downstream end of the string of interconnected pouches,
- a cutting device (80), e.g. downstream of the master drive unit (70), which cutting device (80) is configured to cut individual pouches from the string of interconnected pouches, e.g. cutting a group of pouches into individual pouches,
- a filling station (95) configured to fill a product into the individualized pouches,
- a top edge sealing station (90) which is configured to heat-seal a top edge region, alternatively a spout placing and top edge sealing station (90) which is configured to place a spout in a top edge region between first and second walls of the individualized pouches (100) and to heat-seal the top edge region once the spout is placed.

13. A packaging production line for forming, filing and sealing a flexible pouch, comprising the production system according to any one or more of claims 1 - 11, wherein the packaging line further comprises at least one of the following:
- a cooling unit (50) along the path of the string of interconnected pouches and configured to cool the heat-sealed pouches, preferably wherein the cooling unit is arranged downstream of the heat-sealing devices (10, 20),
- a die cut unit (60) along the path of the string of interconnected pouches and configured to trim a contour of the pouches or to punch a hole into the pouches,
- a master drive unit (70) as part of the film material drive and arranged along the path of the string of interconnected pouches and configured to pull a downstream end of the string of interconnected pouches,
- a cutting device (80), e.g. downstream of the master drive unit (70), which cutting device (80) is configured to cut individual pouches from the string of interconnected pouches, e.g. cutting a group of pouches into individual pouches,
- a spout placing and top edge sealing station (90) which is configured to place a spout in a top edge region between first and second walls of the individualized pouches (100) and to heat-seal the top edge region once the spout is placed,
- a filling station (95) configured to fill a product into the individualized pouches via the spout,
- a closure application station (97) configured to apply a closure, e.g. a cap, on the spout.

14. A method for producing flexible pouches (100), preferably flexible stand-up pouches, said pouches each having a pouch body made from heat-sealable film material, preferably a metal-free heat-sealable film material, wherein use is made of a production system according to any one or more of claims 1 - 11 or a packaging machine according to claim 12 or a packaging production line according to claim 13, wherein the method comprises:
- arranging a group (120) of first and second pouches (100a, 100b) at the first bottom sealing station (11),
- operating the first bottom sealing station (11) so that each bottom sealing unit (13) of the first bottom sealing station (11), in a cycle, heat-seals:
- the first side edge section (110a) of the first side edge (103a) and the second side edge section (110b) of the second side edge (103b) of said first pouch (100a) of the group (120),
- the second side edge section (110b) of the adjoining second side edge (103b) of the upstream adjacent second pouch (100b),
- the first side edge section (110a) of the adjoining first side edge (103a) of the downstream adjacent second pouch (100b),
- optionally, the bottom region (104) of a first pouch (100a) of the group (120),
- moving the string of interconnected pouches in the transport direction (T) so that said group (120) is arranged at the second bottom sealing station (12),
- operating the second bottom sealing station (12) so that each bottom sealing unit (13) of the second bottom sealing station (12), in a cycle, heat-seals:
- the first side edge section (110a) of the first side edge (103a) and the second side edge section (110b) of the second side edge (103b) of a second pouch (100b) of the group (120),
- the second side edge section (110b) of the adjoining second side edge (103b) of the upstream adjacent first pouch (100a),
- the first side edge section (110a) of the adjoining first side edge (103a) of the downstream adjacent first pouch (100a),
- optionally, the bottom region (104) of a second pouch (100b) of the group (120),
wherein the first side edge section (110a) and the second side edge section (110b) each extend from below to above the folding line (108), e.g. the first and second side edge sections extending from a lower edge of the bottom gusset of the pouch to above the folding line.

15. Method according to claim 14, wherein use is made of a production system according to any one or more of claims 5-11 or a packaging machine according to claim 12 or a packaging production line according to claim 13, wherein the method comprises:
- moving the string of interconnected pouches in the transport direction (T) so that the group (120) is arranged at the first side edge sealing station (21),
- operating the first side edge sealing station (21) so that each side edge sealing unit (23) of the first side edge sealing station (21), in a cycle, heat-seals the first side edge (103a) of a first pouch (100a) of the group (120) and the adjoining second side edge (103b) of a second pouch (100b) upstream adjacent to said first pouch,
- moving the string of interconnected pouches in the transport direction (T) so that the group (120) is arranged at the second side edge sealing station (22),
- operating the second side edge sealing station (22) so that each side edge sealing unit (23) of the second side edge sealing station (22), in a cycle, heat-seals the second side edge (103b) of a first pouch (100a) of the group (120) and the adjoining first side edge (103a) of a second pouch (100b) downstream adjacent to said first pouch.

16. Method according to claim 14 or 15, wherein a group (120) is formed by four adjacent pouches in the string of interconnected pouches, the group having two first pouches (100a) and two second pouches (100b), wherein the string of interconnected pouches is intermittently moved in steps of four discrete pouch positions from the first bottom sealing station (11) to the second bottom sealing station (12), and possibly, from the first side edge sealing station (21) to the second side edge sealing station (22).

17. A bottom sealing unit (13) for use in a bottom sealing station (11, 12) of a bottom heat-sealing device (10) of a production system (1) for the production of flexible pouches (100), preferably flexible stand-up pouches, said pouches each having a pouch body made from heat-sealable film material, preferably a metal-free heat-sealable film material,
wherein each pouch body comprises:
- a first wall (101) and a second wall (102) which are opposed to each other,
- a bottom gusset which comprises a first bottom gusset wall part (106) and a second bottom gusset wall part (107) connected to each other along a folding line (108), wherein the bottom gusset is located below the folding line and between the first wall (101) and the second wall (102), and
- a first side edge (103a) and a second side edge (103b),
wherein the production system comprises a film material drive (30, 40, 70) which is configured to transport a string of interconnected pouches (100) during production thereof along at least the bottom heat-sealing device (10) in a transport direction (T), e.g. intermittently,
wherein each of the bottom sealing stations (11, 12) comprises one or more of the bottom sealing units (13),
wherein each bottom sealing unit (13) comprises:
- a first bottom sealing jaw (14),
- a second bottom sealing jaw (15),
wherein each bottom sealing station (11, 12), e.g. each bottom sealing unit (13), comprises an actuator device configured to move the first and/or second jaws relative to one another between an opened position and a clamped position,
wherein the first and second bottom sealing jaws of the bottom sealing unit each have a sealing face (16) comprising side face portions (16b) configured to project across a first side edge section (110a) of the first side edge (103a) and a second side edge section (110b) of the second side edge (103b) of said pouch, as well as across an adjoining side edge section (11 0b, 110a) of each adjacent pouch
